# EUROPEAN PATENT APPLICATION

(11) **EP 4 779 784 A1**
(43) Date of publication of application: **22.07.2026**
(21) Application number: 25861686.1
(22) Date of filing: 19.09.2025
(51) Int. Cl.: H01M 50/383, H01M 50/342, H01M 50/282, H01M 50/367

(54) **BATTERY PACK**

(30) Priority: 04.12.2024 KR 20240178533
(71) Applicant: LG ENERGY SOLUTION, LTD., Seoul 07335 (KR)
(72) Inventor: KIM, So Young, Daejeon 34122 (KR); KIM, Soo Youl, Daejeon 34122 (KR); CHANG, Hyuk Kyun, Daejeon 34122 (KR); PARK, Gi Chan, Daejeon 34122 (KR)
(74) Representative: Plasseraud IP
(86) International application number: PCT/KR2025/014646
(87) International publication number: WO 2026/121499

(57) **Abstract**

According to exemplary embodiments, a battery pack is provided. The battery pack may include: a pack housing including a bottom plate, side walls, and a lid plate; a plurality of battery cell assemblies on the bottom plate; and a first fire-resistant sheet between the plurality of battery cell assemblies and the lid plate. The first fire-resistant sheet may include a plurality of overlapping parts that are folded and overlapped.

## Description

### [Technical Field]

The present disclosure relates to a battery pack. This application claims the benefit of Korean Patent Application No. 10-2024-0178533, filed on December 4, 2024, the disclosure of which is incorporated herein by reference.

### [Background]

Secondary batteries, unlike primary batteries, are capable of being charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has been dramatically reduced, and as the driving range of battery electric vehicles (BEVs) has increased to a level equivalent to that of fuel vehicles, the main applications of secondary batteries are shifting from mobile devices to mobility.

In the current trend where secondary batteries for mobility are emphasized, the main direction of secondary battery technology development is cost reduction and improvement of safety. Secondary batteries account for the largest portion of the manufacturing cost of BEVs. Therefore, the most important factor in increasing the market share of BEVs compared to internal combustion engine vehicles is the production cost of secondary batteries. Cost reduction can be achieved through reduction of raw materials, reduction of the number of steps in the production process, and reduction of tact time. The safety of secondary batteries is very important as it is directly related to the lives of mobility passengers. The main task for improving the safety of secondary batteries is to provide a solution for preventing thermal runaway of battery packs.

### [Summary]

### [Technical Problem]

The technical problem to be solved by the technical idea of the present disclosure is to provide a battery pack with improved safety.

### [Technical Solution]

According to exemplary embodiments of the present disclosure for solving the above-described problem, a battery pack is provided. The battery pack may include: a pack housing including a bottom plate, side walls, and a lid plate; a plurality of battery cell assemblies on the bottom plate; and a first fire-resistant sheet between the plurality of battery cell assemblies and the lid plate. The first fire-resistant sheet may include a plurality of overlapping parts that are folded and overlapped.

The first fire-resistant sheet may be attached to the lid plate.

The plurality of overlapping parts may include: first overlapping parts extending in a first direction parallel to the fire-resistant sheet; and second overlapping parts extending in a second direction parallel to the fire-resistant sheet and intersecting each of the first overlapping parts.

The first overlapping parts may be spaced apart from each other. The second overlapping parts may be spaced apart from each other.

The first fire-resistant sheet may overlap with the entire surface of the lid plate facing the plurality of battery cell assemblies.

The plurality of overlapping parts may be arranged in a spiral pattern.

The battery pack may further include a second fire-resistant sheet between the plurality of battery cell assemblies and the lid plate. The second fire-resistant sheet is attached to the lid plate and may include a region overlapping with a portion of the first fire-resistant sheet.

The second fire-resistant sheet may include a plurality of overlapping parts that are folded and overlapped. Each of the plurality of overlapping parts of the second fire-resistant sheet may be aligned with a corresponding one of the plurality of overlapping parts of the first fire-resistant sheet.

The battery pack may further include a module frame accommodating each of the plurality of battery cell assemblies. The module frame may include: a base plate, a top plate spaced apart from the base plate, and side plates connecting the base plate and the top plate. The top plate of the module frame may include venting holes.

According to exemplary embodiments of the present disclosure for solving the above-described problem, a battery pack is provided. The battery pack may include: a pack housing including a bottom plate, a lid plate spaced apart from the bottom plate in a vertical direction, a support plate between the bottom plate and the lid plate, and side walls connected to each of the bottom plate, the support plate, and the lid plate; a plurality of battery cell assemblies on the support plate; and a fire-resistant sheet between the bottom plate and the support plate.

The fire-resistant sheet may include a plurality of overlapping parts that are folded and overlapped.

The fire-resistant sheet may be attached to the bottom plate.

The support plate may include first venting holes.

The battery pack may further include: a module frame accommodating each of the plurality of battery cell assemblies. The module frame may include: a base plate, a top plate spaced apart from the base plate, and side plates connecting the base plate and the top plate. The base plate of the module frame may include second venting hole. Each of the second venting holes may be aligned with a corresponding one of the first venting holes in the vertical direction.

The pack housing may further include a venting space between the support plate and the bottom plate.

### [Advantageous Effects]

According to exemplary embodiments of the present disclosure, by providing an expandable fire-resistant sheet in the battery pack, it is possible to prevent the pack housing from being directly exposed to high-temperature gases and ejecta. Thereby, thermal runaway of the battery pack can be prevented.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a cross-sectional view of a battery pack according to exemplary embodiments.
FIG. 2 is a cross-sectional view of a battery pack according to exemplary embodiments.
FIG. 3 is a top view of a fire-resistant sheet according to exemplary embodiments.
FIG. 4 is a top view of a fire-resistant sheet according to exemplary embodiments.
FIG. 5 is a top view of a fire-resistant sheet according to exemplary embodiments.
FIG. 6 is a cross-sectional view of a battery pack according to exemplary embodiments.
FIG. 7 is a cross-sectional view of a battery pack according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

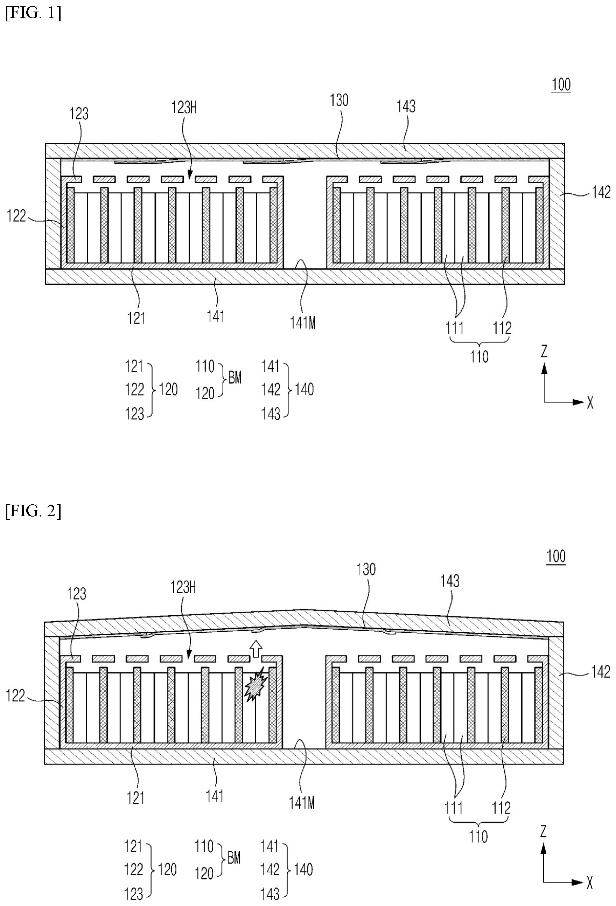

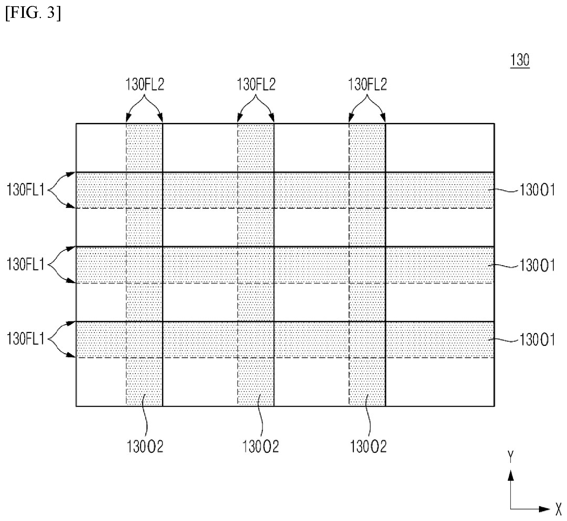

FIGS. 1 and 2 are cross-sectional views showing a battery pack 100 according to exemplary embodiments. FIG. 1 shows the battery pack 100 in a normal state. FIG. 2 shows the battery pack 100 when there is a fire event. FIG. 3 is a top view showing the fire-resistant sheet 130.

Referring to FIGS. 1 to 3, the battery pack 100 may include a battery cell assembly 110, a module frame 120, a fire-resistant sheet 130, and a pack housing 140.

The battery cell assembly 110 may include battery cells 111 and separators 112.

A plurality of battery cells 111 may be arranged in the X direction. According to exemplary embodiments, each of the plurality of battery cells 111 may be bidirectional cells. That is, the positive terminal of each of the plurality of battery cells 111 may be disposed at one end of each, and the negative terminal of each of the plurality of battery cells 111 may be disposed at the other end of each. Those of ordinary skill in the art will be able to easily arrive at an embodiment in which each of the plurality of battery cells 111 is a unidirectional cell based on what is described herein.

Each of the plurality of battery cells 111 includes an electrode assembly, an electrolyte, and a case covering them. The case may be a pouch case or a prismatic case. The pouch case may include an aluminum laminate sheet. The prismatic case may include a metal material such as aluminum. The prismatic case may have a rectangular parallelepiped shape.

The electrode assembly embedded in the case may include a positive electrode, a negative electrode, and a separator interposed between the positive electrode and the negative electrode. The electrode assembly may be either a jelly-roll type or a stack-type depending on the assembly form. The jelly-roll type electrode assembly may include a wound structure of a positive electrode, a negative electrode, and a separator interposed between them. The stack-type electrode assembly may include a plurality of positive electrodes, a plurality of negative electrodes, and a plurality of separators interposed between them that are sequentially stacked.

The separators 112 may separate the battery cells 111. The separators 112 may be interposed between the battery cells 111, or may be disposed in contact with the outermost battery cells 111 in the X direction.

The plurality of separators 112 may include a compressible material. The plurality of separators 112 may absorb swelling of the plurality of battery cells 111. The plurality of separators 112 may be thermal barriers. According to exemplary embodiments, each of the plurality of separators 112 may have a high melting temperature and a low thermal conductivity. According to exemplary embodiments, each of the plurality of separators 112 may include a flame-retardant material such as ceramic and coated glass material. According to exemplary embodiments, the plurality of separators 112 may also be configured to release a fire retarding material and a fire extinguishing agent when a thermal runaway event occurs.

The module frame 120 may accommodate the battery cell assembly 110. The module frame 120 may include a base plate 121, side plates 122, and a top plate 123. The base plate 121, side plates 122, and top plate 123 may provide an internal space for accommodating the battery cell assembly 110. The battery cell assembly 110 and the module frame 120 may constitute a battery module (BM).

The base plate 121 may be in contact with the mounting surface 141M of the bottom plate 141 of the pack housing 140. The base plate 121 may support the battery cell assembly 110 from below in the Z direction.

The side plates 122 may connect the base plate 121 and the top plate 123. The side plates 122 may be substantially perpendicular to the base plate 121 and the top plate 123, respectively. The side plates 122 may support the battery cell assembly 110 from the side.

The top plate 123 may be spaced apart from the base plate 121 in the Z direction. The top plate 123 may be substantially parallel to the base plate 121. According to exemplary embodiments, the top plate 123 may not be in contact with the battery cell assembly 110. The top plate 123 may include a plurality of venting holes 123H. According to exemplary embodiments, each of the venting holes 123H may overlap with the battery cells 111 in the Z direction.

The internal space of the module frame 120 may communicate with the internal space of the pack housing 140 through the venting holes 123H. The number and location of the venting holes 123H may be variously changed according to the number of battery cells 111 and the size of the module frame 120.

FIGS. 1 and 2 show an embodiment in which the battery cell assemblies 110 are accommodated in the module frame 120 and mounted on the pack housing 140, but the structure of the battery pack 100 is not limited thereto. According to other exemplary embodiments, the battery cell assemblies 110 may be accommodated in the internal space of the pack housing 140 without being accommodated in the module frame 120. That is, the battery pack 100 may be a module-less type (or cell-to-pack structure).

The fire-resistant sheet 130 may be between the battery cell assemblies 110 and the lid plate 143. The fire-resistant sheet 130 may overlap with the entire surface of the lid plate 143 facing the battery cell assemblies 110 in the Z direction.

The fire-resistant sheet 130 may be attached to the lid plate 143. The fire-resistant sheet 130 may be attached to the surface of the lid plate 143 facing the battery cell assemblies 110. The fire-resistant sheet 130 may cover the entire surface of the lid plate 143 facing the battery cell assemblies 110.

Referring also to FIG. 3, the fire-resistant sheet 130 may include regions that are folded and overlapped. The fire-resistant sheet 130 may be folded along each of the folding lines 130FL1. According to exemplary embodiments, each of the folding lines 130FL1 may be substantially parallel to the X direction. Overlapping parts 13001 may be formed by folding along the folding lines 130FL1. In each of the overlapping parts 13001, the fire-resistant sheet 130 may be overlapped in multiple layers (for example, three layers). Each of the overlapping parts 13001 may be spaced apart from each other in the Y direction.

The fire-resistant sheet 130 may be folded along each of the folding lines 130FL2. According to exemplary embodiments, each of the folding lines 130FL2 may be substantially parallel to the Y direction. Overlapping parts 13002 may be formed by folding along the folding lines 130FL2. In each of the overlapping parts 13002, the fire-resistant sheet 130 may be overlapped in multiple layers (for example, three layers). Each of the overlapping parts 13002 may be spaced apart from each other in the X direction.

Each of the overlapping parts 13001 may intersect with each of the overlapping parts 13002. At the intersection of the overlapping parts 13001 and 13002, the fire-resistant sheet 130 may be overlapped in multiple layers (for example, six layers).

By including the fire-resistant sheet 130, the battery pack 100 can prevent or delay thermal runaway of the battery pack 100. FIG. 2 shows an example in which a fire event occurs in the battery pack 100. Referring also to FIG. 2, when a fire event occurs in one of the battery cells 111, ejecta including sparks and conductive particles, and high-temperature gas may be generated by ignition. The high-temperature gas and ejecta may move to the internal space of the pack housing 140 through the venting holes 123H of the top plate 123 of the module frame 120. In addition, due to the increase in temperature and pressure inside the pack housing 140, the lid plate 143 may expand toward the outside of the pack housing 140. When the high-temperature gas and ejecta come into direct contact with the pack housing 140, damage to the pack housing 140 may be caused. In particular, when the high-temperature gas and ejecta directly collide with the expanded lid plate 143, deformation such as cracks may be caused in the lid plate 143. As a result, the high-temperature gas, ejecta, and flame inside the battery pack 100 may leak to the outside of the battery pack 100, causing thermal runaway.

The battery pack 100 according to exemplary embodiments of the present disclosure can prevent or delay the above-described thermal runaway problem by providing the fire-resistant sheet 130. When a fire event occurs inside the battery pack 100 and the internal pressure of the pack housing 140 increases, some or all of the overlapping parts 13001 and 13002 of the fire-resistant sheet 130 may unfold. The fire-resistant sheet 130 may unfold according to the shape of the lid plate 143 expanded by the internal pressure of the battery pack 100. The fire-resistant sheet 130 may completely cover the surface of the expanded lid plate 143. As a result, the lid plate 143 may not come into direct contact with the high-temperature gas and ejecta inside the battery pack 100. Accordingly, it is possible to prevent deformation such as cracks from being applied to the lid plate 143, and to prevent thermal runaway of the battery pack 100.

FIG. 3 shows an embodiment in which the fire-resistant sheet 130 includes overlapping parts 13001 substantially parallel to the X axis and overlapping parts 13002 substantially parallel to the Y axis, but the shape of the fire-resistant sheet 130 is not limited thereto. According to other exemplary embodiments, the fire-resistant sheet 130 may include only overlapping parts 13001 substantially parallel to the X axis, or may include only overlapping parts 13002 substantially parallel to the Y axis. According to other exemplary embodiments, the fire-resistant sheet 130 may also be folded along a folding axis between the X axis and the Y axis. The shape of the fire-resistant sheet 130 may be variously changed in consideration of the size of the battery pack 100, the number of battery modules (BM), and the like.

The fire-resistant sheet 130 may include a fire-resistant material. As a non-limiting example, the fire-resistant sheet 130 may include any one of polyimide, PVDF (polyvinylidene fluoride), and PTFE (polytetrafluoroethylene). As a non-limiting example, the fire-resistant sheet 130 may be a ceramic coated film.

The fire-resistant sheet 130 may have a melting temperature prepared for a fire event of the battery pack 100. According to exemplary embodiments, the melting temperature of the fire-resistant sheet 130 may be about 150°C or higher. According to exemplary embodiments, the melting temperature of the fire-resistant sheet 130 may be about 250°C or higher. According to exemplary embodiments, the melting temperature of the fire-resistant sheet 130 may be about 350°C or higher. According to exemplary embodiments, the melting temperature of the fire-resistant sheet 130 may be about 500°C or higher. According to exemplary embodiments, the melting temperature of the fire-resistant sheet 130 may be about 700°C or higher.

The pack housing 140 may include a bottom plate 141, side walls 142, and a lid plate 143.

The bottom plate 141 may support the battery modules (BM) at the lower part in the Z direction. The bottom plate 141 may include a mounting surface 141M on which the battery modules (BM) are mounted.

The side walls 142 may connect the bottom plate 141 and the lid plate 143. The side walls 142 may be substantially perpendicular to the bottom plate 141 and the lid plate 143, respectively.

The lid plate 143 may be spaced apart from the bottom plate 141 in the Z direction. The lid plate 143 may be substantially parallel to the bottom plate 141. The lid plate 143 may be coupled to the side walls 142 by bolts or the like.

### (Second embodiment)

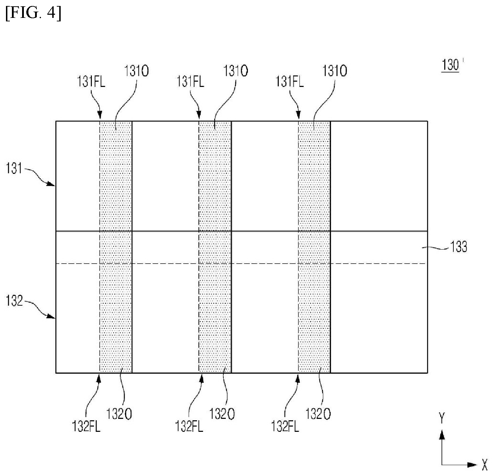

FIG. 4 is a top view showing a fire-resistant sheet 130' according to exemplary embodiments. Hereinafter, the components of the second embodiment that are different from the first embodiment will be mainly described.

The fire-resistant sheet 130' may include a first fire-resistant sheet 131 and a second fire-resistant sheet 132. The first fire-resistant sheet 131 and the second fire-resistant sheet 132 may overlap in an overlapping part 133. The first fire-resistant sheet 131 may overlap with some or all of the second fire-resistant sheet 132. The second fire-resistant sheet 132 may overlap with some or all of the first fire-resistant sheet 131. The fire-resistant sheet 130' may cover the entire surface of the lid plate (143 in FIG. 1) facing the battery modules (BM).

The first fire-resistant sheet 131 may include regions that are folded and overlapped. The first fire-resistant sheet 131 may be folded along each of the folding lines 131FL. According to exemplary embodiments, each of the folding lines 131FL may be substantially parallel to the Y direction. Overlapping parts 1310 may be formed by folding along the folding lines 131FL. In each of the overlapping parts 1310, the first fire-resistant sheet 131 may be overlapped in multiple layers (for example, three layers).

The second fire-resistant sheet 132 may include regions that are folded and overlapped. The second fire-resistant sheet 132 may be folded along each of the folding lines 132FL. According to exemplary embodiments, each of the folding lines 132FL may be substantially parallel to the Y direction. Overlapping parts 1320 may be formed by folding along the folding lines 132FL. In each of the overlapping parts 1320, the second fire-resistant sheet 132 may be overlapped in multiple layers (for example, three layers).

According to exemplary embodiments, each of the folding lines 131FL of the first fire-resistant sheet 131 may be aligned with a corresponding one of the folding lines 132FL of the second fire-resistant sheet 132 in the Y direction. According to exemplary embodiments, each of the overlapping parts 1310 of the first fire-resistant sheet 131 may be aligned with a corresponding one of the overlapping parts 1320 of the second fire-resistant sheet 132 in the Y direction.

However, the shape of the first fire-resistant sheet 131 and the second fire-resistant sheet 132 is not limited thereto. According to other exemplary embodiments, the folding lines 131FL of the first fire-resistant sheet 131 may be alternately arranged with the folding lines 132FL of the second fire-resistant sheet 132 in the X direction. According to other exemplary embodiments, the overlapping parts 1310 of the first fire-resistant sheet 131 may be alternately arranged with the overlapping parts 1320 of the second fire-resistant sheet 132 in the X direction.

### (Third embodiment)

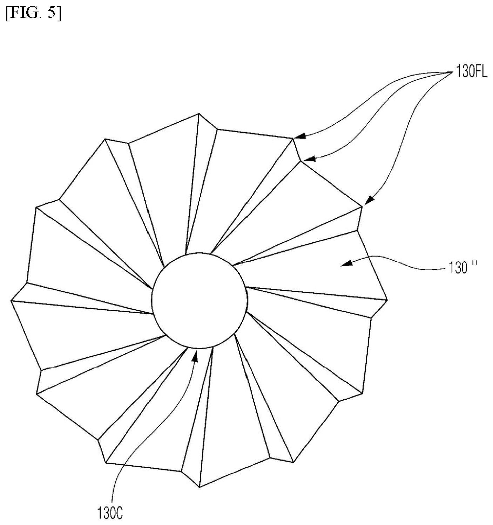

FIG. 5 is a top view showing a fire-resistant sheet 130" according to exemplary embodiments. Hereinafter, the components of the third embodiment that are different from the first embodiment will be mainly described.

The fire-resistant sheet 130" may include regions that are folded and overlapped. The fire-resistant sheet 130" may be folded along each of the folding lines 130FL. The folding lines 130FL may be arranged in a spiral pattern. Overlapping parts may be formed by folding along the folding lines 130FL. In the overlapping parts, the fire-resistant sheet 130" may be overlapped in multiple layers (for example, three layers). According to exemplary embodiments, the overlapping parts may be arranged at equal spacings.

The fire-resistant sheet 130" may include a hole 130C in the center. However, the shape of the fire-resistant sheet 130" is not limited thereto, and may also be formed by spirally folding a continuous sheet.

### (Fourth embodiment)

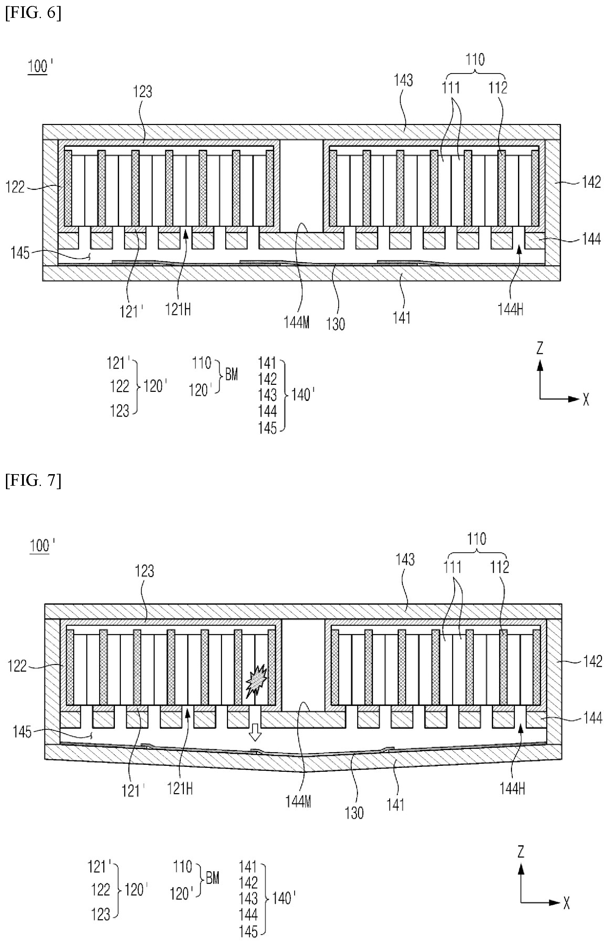

FIGS. 6 and 7 are cross-sectional views showing a battery pack 100' according to exemplary embodiments. FIG. 6 shows the battery pack 100' in a normal state. FIG. 7 shows the battery pack 100' when there is a fire event.

In FIGS. 6 and 7, components having the same reference numerals as in FIGS. 1 and 2 may be applied with the description described above in the first embodiment, and the same description will be omitted. Hereinafter, the components of the fourth embodiment that are different from the first embodiment will be mainly described.

Referring to FIGS. 6 and 7, the battery pack 100 may include a battery cell assembly 110, a module frame 120', a fire-resistant sheet 130, and a pack housing 140'.

The module frame 120' may include a base plate 121', side plates 122, and a top plate 123.

The base plate 121' may be in contact with the mounting surface 144M of the support plate 144 of the pack housing 140. The base plate 121' may support the battery cell assembly 110 at the lower part in the Z direction. The base plate 121' may include a plurality of venting holes 121H. According to exemplary embodiments, the plurality of venting holes 121H may overlap with the battery cells 111 in the Z direction. The number and location of the venting holes 121H may be variously changed according to the number of battery cells 111 and the size of the module frame 120'.

The fire-resistant sheet 130 may be between the bottom plate 141 and the support plate 144. The fire-resistant sheet 130 may be attached to the bottom plate 141. The fire-resistant sheet 130 may be attached to the surface of the bottom plate 141 facing the battery cell assemblies 110. The fire-resistant sheet 130 may cover the entire surface of the bottom plate 141 facing the battery cell assemblies 110. The fire-resistant sheet 130 may have the same or similar structure as the fire-resistant sheets described above with reference to FIGS. 3 to 5.

The pack housing 140' may include a bottom plate 141, side walls 142, a lid plate 143, a support plate 144, and a venting space 145.

The support plate 144 may be between the bottom plate 141 and the lid plate 143. The support plate 144 may be substantially parallel to each of the bottom plate 141 and the lid plate 143. The support plate 144 may be spaced apart from the bottom plate 141 in the Z direction. The support plate 144 may be spaced apart from the lid plate 143 in the Z direction. The bottom plate 141, the lid plate 143, and the support plate 144 may be connected by the side walls 142.

The support plate 144 may support the battery modules (BM) at the lower part in the Z direction. The support plate 144 may include a mounting surface 144M on which the battery modules (BM) are mounted.

The support plate 144 may include a plurality of venting holes 144H. According to exemplary embodiments, each of the venting holes 144H of the support plate 144 may be aligned with each of the venting holes 121H of the base plate 121 in the Z direction.

The venting space 145 may be between the bottom plate 141 and the support plate 144. The venting space 145 may communicate with the internal space of the module frame 120' through the venting holes 121H and 144H.

By including the fire-resistant sheet 130, the battery pack 100' can prevent or delay thermal runaway of the battery pack 100'. FIG. 7 shows an example in which a fire event occurs in the battery pack 100'. Referring also to FIG. 7, when a fire event occurs in one of the battery cells 111, ejecta including sparks and conductive particles, and high-temperature gas may be generated by ignition. The high-temperature gas and ejecta may move from the internal space of the module frame 120' to the venting space 145 through the venting holes 121H and 144H. In addition, due to the increase in temperature and pressure inside the pack housing 140', the bottom plate 141 may expand toward the outside of the pack housing 140. When the high-temperature gas and ejecta come into direct contact with the pack housing 140, damage to the pack housing 140 may be caused. In particular, when the high-temperature gas and ejecta directly collide with the expanded bottom plate 141, deformation such as cracks may be caused in the bottom plate 141. As a result, the high-temperature gas, ejecta, or flame inside the battery pack 100' may leak to the outside of the battery pack 100', causing thermal runaway.

The battery pack 100' according to exemplary embodiments of the present disclosure can prevent or delay the above-described thermal runaway problem by providing the fire-resistant sheet 130. When a fire event occurs inside the battery pack 100' and the internal pressure of the pack housing 140 increases, some or all of the overlapping parts (for example, 13001 and 13002 in FIG. 3) of the fire-resistant sheet 130 may unfold. The fire-resistant sheet 130 may unfold according to the shape of the bottom plate 141 expanded by the internal pressure of the battery pack 100'. The fire-resistant sheet 130 may completely cover the surface of the expanded bottom plate 141. As a result, the bottom plate 141 may not come into direct contact with the high-temperature gas and ejecta inside the battery pack 100'. Accordingly, it is possible to prevent deformation such as cracks from being applied to the bottom plate 141, and to prevent thermal runaway of the battery pack 100'.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery pack comprising:
a pack housing comprising a bottom plate, side walls, and a lid plate;
a plurality of battery cell assemblies on the bottom plate; and
a first fire-resistant sheet between the plurality of battery cell assemblies and the lid plate, wherein
the first fire-resistant sheet comprises a plurality of overlapping parts that are folded and overlapped.

2. The battery pack of claim 1, wherein
the first fire-resistant sheet is attached to the lid plate.

3. The battery pack of claim 1, wherein
the plurality of overlapping parts comprises:
a plurality of first overlapping parts extending in a first direction parallel to the first fire-resistant sheet; and
a plurality of second overlapping parts extending in a second direction parallel to the fire-resistant sheet and intersecting each of the plurality of first overlapping parts.

4. The battery pack of claim 3, wherein
the first overlapping parts are spaced apart from each other, and
the second overlapping parts are spaced apart from each other.

5. The battery pack of claim 1, wherein
the first fire-resistant sheet overlaps with the entire surface of the lid plate facing the plurality of battery cell assemblies.

6. The battery pack of claim 1, wherein
the plurality of overlapping parts is arranged in a spiral pattern.

7. The battery pack of claim 1, further comprising:
a second fire-resistant sheet between the plurality of battery cell assemblies and the lid plate, wherein
the second fire-resistant sheet is attached to the lid plate and comprises a region overlapping with a portion of the first fire-resistant sheet.

8. The battery pack of claim 7, wherein
the second fire-resistant sheet comprises a plurality of overlapping parts that are folded and overlapped, and
each of the plurality of overlapping parts of the second fire-resistant sheet is aligned with a corresponding one of the plurality of overlapping parts of the first fire-resistant sheet.

9. The battery pack of claim 1, further comprising:
a module frame accommodating each of the plurality of battery cell assemblies, wherein
the module frame comprises:
a base plate,
a top plate spaced apart from the base plate, and
side plates connecting the base plate and the top plate, wherein
the top plate of the module frame comprises venting holes.

10. A battery pack comprising:
a pack housing comprising a bottom plate, a lid plate spaced apart from the bottom plate in a vertical direction, a support plate between the bottom plate and the lid plate, and side walls connected to each of the bottom plate, the support plate, and the lid plate;
a plurality of battery cell assemblies on the support plate; and
a fire-resistant sheet between the bottom plate and the support plate.

11. The battery pack of claim 10, wherein
the fire-resistant sheet comprises a plurality of overlapping parts that are folded and overlapped.

12. The battery pack of claim 10, wherein
the fire-resistant sheet is attached to the bottom plate.

13. The battery pack of claim 10, wherein
the support plate comprises first venting holes.

14. The battery pack of claim 13, further comprising:
a module frame accommodating each of the plurality of battery cell assemblies, wherein
the module frame comprises:
a base plate,
a top plate spaced apart from the base plate, and
side plates connecting the base plate and the top plate, wherein
the base plate of the module frame comprises second venting holes, and
each of the second venting holes is aligned with a corresponding one of the first venting holes in the vertical direction.

15. The battery pack of claim 10, wherein
the pack housing further comprises a venting space between the support plate and the bo ttom plate.
